# EUROPÄISCHE PATENTANMELDUNG

(11) **EP 4 306 487 A1**
(43) Veröffentlichungstag der Anmeldung: **17.01.2024**
(21) Anmeldenummer: 22020334.3
(22) Anmeldetag: 14.07.2022
(51) Int. Cl.: C01C 1/04, C25B 1/04, F25J 3/04, H01M 8/22

(54) **VERFAHREN UND VORRICHTUNG ZUR ERZEUGUNG VON AMMONIAK**

(71) Anmelder: Linde GmbH, 82049 Pullach (DE)
(72) Erfinder: Mihailowitsch, Dieter, 82049 Pullach (DE)
(74) Vertreter: Fischer, Werner

(57) **Zusammenfassung**

Die Erfindung betrifft ein Verfahren sowie eine Vorrichtung zur Erzeugung von Ammoniak (17) mit Hilfe einer Vorrichtung (A), zu deren Betrieb ein erster, kohlendioxidfrei erzeugter elektrischer Strom (4) aus einer ersten Stromquelle (Q1) mit zeitlich veränderlicher Leistung eingesetzt wird, wobei der erste (4) durch einen zweiten, in einer zweiten Stromquelle (Q2) unter Einsatz eines Brennstoffs (19) erzeugten elektrischen Strom (5) so ergänzt wird, dass die Vorrichtung im Normalbetrieb stets mit elektrischem Strom (2) versorgt werden kann, dessen Leistung einen vorgegebenen Mindestwert übersteigt. Kennzeichnend hierbei ist, dass mit Hilfe der Vorrichtung erzeugtes Ammoniak (18) in flüssiger Form in einen Speicher (B) überführt wird, aus dem Ammoniak (19) entnommen und in der zweiten Stromquelle (Q2) als Brennstoff eingesetzt wird, um den zweiten elektrischen Strom (5) zu erzeugen.

## Beschreibung

Die Erfindung betrifft ein Verfahren zur Erzeugung von Ammoniak mit Hilfe einer Vorrichtung, zu deren Betrieb ein erster, kohlendioxidfrei erzeugter elektrischer Strom aus einer ersten Stromquelle mit zeitlich veränderlicher Leistung eingesetzt wird, wobei der erste durch einen zweiten, in einer zweiten Stromquelle unter Einsatz eines Brennstoffs erzeugten elektrischen Strom so ergänzt wird, dass die Vorrichtung im Normalbetrieb stets mit elektrischem Strom versorgt werden kann, dessen Leistung einen vorgegebenen Mindestwert übersteigt.

Weiterhin betrifft die Erfindung die Vorrichtung zur Durchführung des erfindungsgemäßen Verfahrens.

Unter dem Normalbetrieb ist ein Modus zu verstehen, in dem die eingesetzte Vorrichtung Ammoniak definierter Qualität in einer Menge erzeugt, die zwar zwischen einem Minimal- und einem Maximalwert variieren kann, die jedoch stets von Null verschieden ist. Das An- und Abfahren sowie der Stillstand der Vorrichtung gehören nicht zu ihrem Normalbetrieb.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es beinahe ausschließlich nach dem Haber-Bosch-Verfahren aus Stickstoff, der kryogen oder adsorptiv aus Luft abgetrennt wird, und Wasserstoff synthetisiert. Je nachdem, ob der Wasserstoff, wie heute noch weitgehend üblich, unter Freisetzung großer Mengen klimaschädlichen Kohlendioxids aus fossilen Energieträgern wie Erdgas, Erdöl oder Kohle, oder kohlendioxidfrei gewonnen wird, spricht man von "Braunem Ammoniak" bzw. "Grünem Ammoniak".

Beim Haber-Bosch-Verfahren wird ein vorwiegend aus Wasserstoff und Stickstoff bestehendes Ammoniaksynthesegas, in dem die beiden Stoffe in dem für die Ammoniaksynthese stöchiometrischen Verhältnis von 3:1 vorliegen, mit einem Druck zwischen 10 und 200bar(a) einem Ammoniakreaktor zugeführt, um mit katalytischer Unterstützung in einer exothermen Reaktion zu Ammoniak umgesetzt zu werden. Aufgrund thermodynamischer Limitierungen erfolgt die Umsetzung allerdings nur unvollständig, so dass ein Gasgemisch entsteht, das neben Ammoniak auch erhebliche Wasserstoff- und Stickstoffanteile enthält. Mit einer Temperatur zwischen 400 und 450°C verlässt dieses Gasgemisch den Ammoniakreaktor und wird nachfolgend in einer Reihe von Wärmetauschern abgekühlt, um Ammoniak durch Kondensation abzuscheiden und ein weitgehend aus Wasserstoff und Stickstoff bestehendes Restgas zu erhalten, das zur Erhöhung der Ammoniakausbeute zurückgeführt und bei der Bildung des Ammoniaksynthesegases verwendet wird.

Zur Erzeugung von "Grünem Ammoniak" wird Wasserstoff kohlendioxidfrei beispielsweise durch elektrochemische Zerlegung von Wasser unter Verwendung eines Elektrolyseurs gewonnen und zur Bildung des Ammoniaksynthesegases eingesetzt. Der insgesamt für die Ammoniakerzeugung benötigte Strom wird direkt aus regenerativen Quellen, wie Wind- oder Solarkraftwerken, oder als Überschussstrom aus dem öffentlichen Netz bezogen, weshalb er nicht mit konstanter Leistung zur Verfügung steht. Da sich der Betrieb des Elektrolyseurs relativ einfach und schnell an schwankende Bedingungen anpassen lässt und die Wasserstoffproduktion in erster Näherung proportional zur elektrischen Leistung ist, variiert der Mengenstrom des im Elektrolyseur produzierten Wasserstoffs mit der Stärke des verfügbaren elektrischen Stroms.

Im Gegensatz zum Elektrolyseur und dem zur Stickstoffgewinnung eingesetzten Luftzerleger, kann der Ammoniakreaktor nur sehr langsam und begrenzt an schwankende Betriebsbedingungen angepasst werden. Unterschreitet die zuführbare Menge an Ammoniaksynthesegas einen Mindestwert, muss der Normalbetrieb unterbrochen und der Ammoniakreaktor abgeschaltet werden. Um dies zu vermeiden, werden nach dem Stand der Technik in Stromüberschusszeiten, in denen der Elektrolyseur mehr Wasserstoff und der Luftzerleger mehr Stickstoff produziert, als im Ammoniakreaktor verbraucht werden kann, Wasserstoff und Stickstoff gespeichert und in Strommangelzeiten dazu eingesetzt, das Ammoniaksynthesegas mit einem oberhalb des Mindestwertes liegenden Mengenstrom zu bilden.

Wasserstoff und Stickstoff werden jeder für sich oder gemeinsam entweder gasförmig oder tiefkalt und in flüssiger Form gespeichert. In jedem Fall ist die Speicherung kostenintensiv, da die erforderlichen Speicher sehr groß und/oder druckfest oder wärmeisoliert ausgeführt sein müssen und darüber hinaus Aufwendungen für Apparate und Betriebsmittel zur Verdichtung bzw. Abkühlung in erheblichem Umfang anfallen. Zudem besteht die Gefahr, dass die gespeicherten Mengen zur Überbrückung eines länger andauernden Strommangels nicht ausreichen und der Ammoniakreaktor daher trotz allem abgeschaltet werden muss.

Außerplanmäßiges Ab- und Anfahren des Ammoniakreaktors sollte jedoch möglichst vermieden werden, da die damit verbundenen Druck- und Temperaturwechsel den Reaktor selbst, aber auch Hilfsapparate wie Synthesegas- und Kältemittelverdichter mechanisch stark beanspruchen. Der eingesetzte Katalysator kann zerfallen, wodurch seine Aktivität abnimmt, der Druckverlust über das Katalysatorbett ansteigt und die im Ammoniakreaktor eingesetzten Gase fehlverteilt werden. Darüber hinaus kann während des bis zu zwei Tage dauernden Wiederanfahrens des Ammoniakreaktors kein Ammoniak zur Abgabe als Produkt erzeugt werden, auch wenn Wasserstoff und Stickstoff in dieser Zeit bereits in ausreichenden Mengen zur Verfügung stehen.

Aufgabe der vorliegenden Erfindung ist es daher, ein Verfahren sowie eine Vorrichtung der gattungsgemäßen Art anzugeben, mit denen die beschriebenen Nachteile des Standes der Technik überwunden werden.

Diese Aufgabe wird verfahrensseitig erfindungsgemäß dadurch gelöst, dass im Verfahren erzeugtes Ammoniak in flüssiger Form in einen Speicher überführt wird, aus dem Ammoniak entnommen und in der zweiten Stromquelle als Brennstoff eingesetzt wird, um den zweiten elektrischen Strom zu erzeugen.

Flüssiges Ammoniak kann bei moderaten Drücken und Temperaturen auf vergleichsweise kleinem Raum kostengünstig gespeichert werden. In Ammoniakanlagen ist in der Regel ein Ammoniakprodukt-Speicher vorhanden, in dem das als Produkt abgebbare Ammoniak vor seiner weiteren Verwendung - beispielsweise als Energieträger - auf diese Weise zwischengespeichert wird. Einem solchen Ammoniakprodukt-Speicher kann auch das Ammoniak entnommen werden, das zur erfindungsgemäßen Stromerzeugung eingesetzt wird.

Möglich ist aber auch die Verwendung eines separaten Pufferspeichers, der allein das für den erfindungsgemäßen Einsatz in der zweiten Stromquelle bestimmte Ammoniak aufnimmt. Sinnvollerweise wird das Ammoniak in dem separaten Pufferspeicher drucklos und bei Umgebungstemperatur gespeichert, so dass der eingesetzte Speicher auch dann kostengünstig hergestellt und betreiben werden kann, wenn er dazu ausgelegt ist, eine Ammoniakmenge aufnehmen, die zur Überbrückung von Strommangelzeiten ausreicht.

Behälter, wie sie zur Speicherung des Ammoniakprodukts in Ammoniakanlagen eingesetzt werden, sind gewöhnlich kostengünstig aus korrosionsanfälligem Kohlenstoffstahl gefertigt, weshalb das zu speichernde Ammoniak zur Unterdrückung von Korrosionsmechanismen mit einer geringen Menge Wasser versetzt wird. Falls wasserhaltiges Ammoniak nicht in der zweiten Stromquelle als Brennstoff eingesetzt werden kann, wird vorgeschlagen, das aus dem Speicher entnommene Ammoniak stromaufwärts der zweiten Stromquelle über eine Trocknerstation zu führen, um das enthaltene Wasser abzutrennen.

Wenn das für die erfindungsgemäße Stromerzeugung bestimmte Ammoniak in einem separaten Pufferspeicher gespeichert wird, kann dieser im Verhältnis zum Ammoniakprodukt-Speicher kleine Tank aus einem vergleichsweise teuren, gegenüber Ammoniak korrosionsbeständigen Material ausgeführt werden, ohne die Anlagenkosten wesentlich zu erhöhen. Es wird nun vorgeschlagen, das Ammoniak wasserfrei in einem gegenüber Ammoniak korrosionsbeständig ausgeführten Pufferspeicher zu speichern und auf eine Trocknung des Ammoniaks stromaufwärts der zweiten Stromquelle zu verzichten.

Abhängig von Dauer und Umfang der zu erwarteten zu geringen Leistung der ersten Stromquelle sowie der Art der Stromerzeugung in der zweiten Stromquelle kann entschieden werden, ob unter wirtschaftlichen Gesichtspunkten die Option des separaten Pufferspeichers oder die Entnahme des für die erfindungsgemäße Stromerzeugung vorgesehenen Ammoniaks aus dem Ammoniakprodukt-Speicher mit potentiell nachgeschalteter Trocknung zu wählen ist.

In der zweiten Stromquelle kann das aus dem Speicher entnommene, für die Stromerzeugung bestimmte Ammoniak verbrannt werden, um mechanische Energie zum Antrieb eines Stromgenerators zu erzeugen. Vorzugsweise wird das Ammoniak jedoch unter Erzeugung elektrischen Stroms in einer Brennstoffzelle elektrochemisch oxidiert.

Eine bevorzugte Ausgestaltung des erfindungsgemäßen Verfahrens sieht vor, nicht mehr Strom mit Hilfe in der zweiten Stromquelle zu erzeugen, wie zur Ammoniakerzeugung benötigt wird. Es kann aber auch mehr Strom erzeugt werden, der dann etwa zur Stabilisierung des öffentlichen Stromnetzes dient.

Das erfindungsgemäße Verfahren kann bei jeder Art der Ammoniakerzeugung eingesetzt werden. Besonders vorteilhaft ist sein Einsatz aber dann, wenn "grünes Ammoniak" kohlendioxidfrei unter Verwendung eines Elektrolyseurs hergestellt wird.

Weiterhin betrifft die Erfindung eine Vorrichtung zur Erzeugung von Ammoniak, mit einer ersten Stromquelle, aus der ein erster elektrischer Strom zum Betrieb der Vorrichtung mit zeitlich veränderlicher Leistung beziehbar ist, wobei sie eine zweite Stromquelle zur Erzeugung eines zweiten elektrischen Stroms unter Verwendung eines Brennstoffs umfasst, die mit der ersten Stromquelle derart verschaltet ist, das der erste mit dem zweiten elektrischen Strom so ergänzt werden kann, dass der Vorrichtung im Normalbetrieb elektrischer Strom stets mit einer Leistung zur Verfügung steht, die einen vorgegebenen Mindestwert übersteigt.

Die gestellte Aufgabe wird vorrichtungsseitig erfindungsgemäß dadurch gelöst, dass sie einen Speicher zur Speicherung von mit Hilfe der Vorrichtung erzeugbarem Ammoniak umfasst, wobei der Speicher mit der zweiten Stromquelle derart verbunden ist, das gespeichertes Ammoniak aus dem Speicher entnommen und in der zweiten Stromquelle zur Erzeugung des zweiten elektrischen Stroms als Brennstoff eingesetzt werden kann.

Bei dem mit der zweiten Stromquelle verbundenen Speicher kann es sich um einen Ammoniakprodukt-Speicher handeln, in dem als Produkt abgebbares Ammoniak vor seiner weiteren Verwendung zwischengespeichert werden kann. Möglich ist aber auch, den Speicher als separaten Pufferspeicher auszuführen, der allein das für die erfindungsgemäße Bildung der zweiten Wasserstofffraktion bestimmte Ammoniak aufnimmt.

Sinnvollerweise ist der mit der zweiten Stromquelle verbundene Speicher für die drucklose Lagerung des Ammoniaks bei Umgebungstemperatur ausgelegt. Vorzugsweise ist der Speicher zumindest dann, wenn er als separater Pufferspeicher ausgeführt ist, aus einem gegenüber Ammoniak korrosionsbeständigen Material gefertigt.

Die zweite Stromquelle kann ein thermisches Kraftwerk umfassen, in dem das aus dem Speicher entnommene, für die Stromerzeugung bestimmte Ammoniak verbrannt werden kann, um mechanische Energie für den Antrieb eines Stromgenerators zu erzeugen. Vorzugsweise umfasst die zweite Stromquelle jedoch ein elektrochemisches Kraftwerk mit einer Brennstoffzelle, der das für die Stromerzeugung vorgesehene Ammoniak als Brennstoff zugeführt werden kann. Bei der Brennstoffzelle handelt es sich beispielsweise um eine Festoxid-Brennstoffzelle.

Die Erfindung erlaubt es, die Vorrichtung zur Erzeugung von Ammoniak stabil zu betreiben, wobei eine Anbindung an das öffentliche Stromnetz nicht zwingend erforderlich ist.

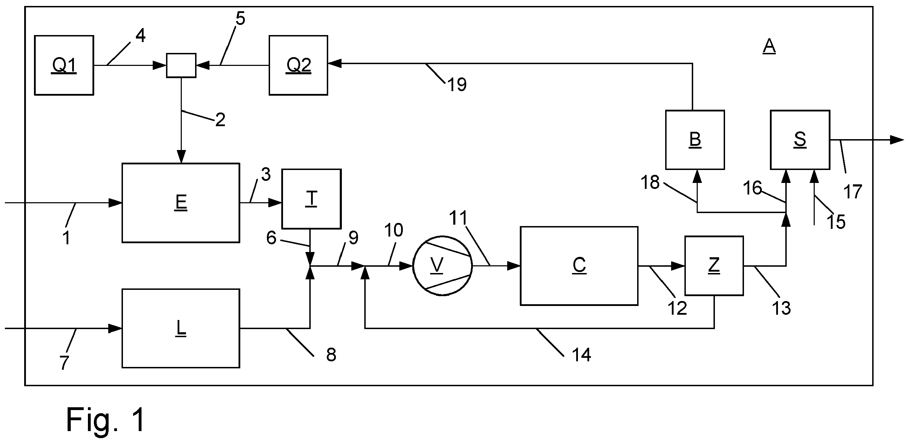

Im Folgenden wird die Erfindung anhand eines in der **Figur 1** schematisch dargestellten Ausführungsbeispiels näher erläutert.

Die Figur 1 zeigt eine Anlage zur Ammoniakerzeugung, die in einer bevorzugten Ausgestaltung des erfindungsmäßen Verfahren betrieben werden kann.

Über Leitung 1 wird dem in der Vorrichtung zur Erzeugung von Ammoniak A angeordneten Elektrolyseur E Wasser zugeführt, um es mit Hilfe von Strom 2 elektrochemisch in Wasserstoff 3 und Sauerstoff (nicht dargestellt) zu spalten. Der Strom 2 wird aus den beiden Teilströmen 4 und 5 gebildet, wobei der ersten, aus einer ersten Stromquelle Q1, bei der es sich beispielsweise um ein Wind- oder ein Solarkraftwerk handelt, mit zeitlich schwankender Leistung bezogene Teilstrom 4 mit dem aus der zweiten Stromquelle Q2 zugeführten zweiten Teilstrom 5 so ergänzt wird, dass der Strom 2 dem Elektrolyseur E im Normalbetrieb der Vorrichtung A mit zeitlich weitgehend konstanter, jedoch stets oberhalb eines definierten Mindestwertes liegenden Leistung zugeführt werden kann. Nicht dargestellt, jedoch als selbstverständlich vorausgesetzt ist hierbei, dass der durch die Stromquellen Q1 und/oder Q2 zur Verfügung gestellte Strom auch zum Betrieb der sonstigen Anlagenkomponenten wie Luftzerleger L, Verdichter V usw. ausreichend ist. Der im Elektrolyseur E erhaltene Wasserstoff 3 wird in der Trocknerstation T getrocknet und praktisch wasserfrei über Leitung 6 mit dem im Luftzerleger L aus Luft 7 gewonnen Stickstoffstrom 8 zum Make-up-Gas 9 vereinigt, das zur Bildung von Ammoniaksynthesegas 10 verwendet wird, in dem Wasserstoff und Stickstoff in dem für die Ammoniaksynthese stöchiometrischen Verhältnis von 3:1 vorliegen. Nach einer Verdichtung im Kompressor V wird das Ammoniaksynthesegas über Leitung 11 mit einem Druck zwischen 100 und 200bar(a) der Ammoniaksynthese C zugeführt, wo es mit katalytischer Unterstützung in einer exothermen Reaktion zu einem Gasgemisch 12 umgesetzt wird, das neben Ammoniak auch erhebliche Wasserstoff- und Stickstoffanteile aufweist. Mit einer Temperatur zwischen 400 und 450°C verlässt das Gasgemisch 12 die Ammoniaksynthese C und wird nachfolgend in der Trenneinrichtung Z abgekühlt, um Ammoniak 13 durch Kondensation abzuscheiden und ein weitgehend aus Wasserstoff und Stickstoff bestehendes Recyclegas 14 zu erhalten, das zur Erhöhung der Ammoniakausbeute zurückgeführt und bei der Bildung des Ammoniaksynthesegases 10 verwendet wird. Gemeinsam mit einer kleinen Menge Wassers 15 wird ein erster Teil 16 des auskondensierten Ammoniaks 13 in den Ammoniakprodukt-Speicher S eingeleitet, aus dem ein Ammoniakprodukt 17 abgezogen werden kann. Ein zweiter Teil 18 des auskondensierten Ammoniaks 13 wird in den vorzugsweise aus einem korrosionsbeständigen Material gefertigten Speicherbehälter B eingeleitet, aus dem Ammoniak 19 entnommen werden kann, um in der zweiten Stromquelle Q2 zur Stromerzeugung beispielsweise einer Brennstoffzelle als Brennstoff zugeführt zu werden.

## Patentansprüche

1. Verfahren zur Erzeugung von Ammoniak (17) mit Hilfe einer Vorrichtung (A), zu deren Betrieb ein erster, kohlendioxidfrei erzeugter elektrischer Strom (4) aus einer ersten Stromquelle (Q1) mit zeitlich veränderlicher Leistung eingesetzt wird, wobei der erste (4) durch einen zweiten, in einer zweiten Stromquelle (Q2) unter Einsatz eines Brennstoffs (19) erzeugten elektrischen Strom (5) so ergänzt wird, dass die Vorrichtung im Normalbetrieb stets mit elektrischem Strom (2) versorgt werden kann, dessen Leistung einen vorgegebenen Mindestwert übersteigt, **dadurch gekennzeichnet, dass** mit Hilfe der Vorrichtung erzeugtes Ammoniak (18) in flüssiger Form in einen Speicher (B) überführt wird, aus dem Ammoniak (19) entnommen und in der zweiten Stromquelle (Q2) als Brennstoff eingesetzt wird, um den zweiten elektrischen Strom (5) zu erzeugen.

2. Verfahren nach Anspruch 1, **dadurch gekennzeichnet, dass** das aus dem Speicher (B) entnommene Ammoniak (19) in der zweiten Stromquelle (Q2) zur Stromerzeugung elektrochemisch oxidiert wird.

3. Verfahren nach Anspruch 1, **dadurch gekennzeichnet, dass** das aus dem Speicher (B) entnommene Ammoniak (19) in der zweiten Stromquelle (Q2) verbrannt wird, um mechanische Energie zum Antrieb eines Stromgenerators zu erzeugen.

4. Verfahren nach einem der Ansprüche 1 bis 3, **dadurch gekennzeichnet, dass** das in der zweiten Stromquelle (Q2) unter Verwendung des aus dem Speicher (B) entnommenen Ammoniaks (19) erzeugter Strom zur Stabilisierung des öffentlichen Stromnetzes eingesetzt wird.

5. Vorrichtung (A) zur Erzeugung von Ammoniak (17), mit einer ersten Stromquelle (Q1), aus der ein erster elektrischer Strom (4) zum Betrieb der Vorrichtung mit zeitlich veränderlicher Leistung beziehbar ist, wobei sie eine zweite Stromquelle (Q2) zur Erzeugung eines zweiten elektrischen Stroms (5) unter Verwendung eines Brennstoffs (19) umfasst, die mit der ersten Stromquelle (Q1) derart verschaltet ist, das der erste (4) mit dem zweiten elektrischen Strom (5) so ergänzt werden kann, dass der Vorrichtung im Normalbetrieb elektrischer Strom (2) stets mit einer Leistung zur Verfügung steht, die einen vorgegebenen Mindestwert übersteigt, **dadurch gekennzeichnet, dass** sie einen Speicher (B) zur Speicherung von mit Hilfe der Vorrichtung (A) erzeugbarem Ammoniak (18) umfasst, wobei der Speicher (B) mit der zweiten Stromquelle (Q2) derart verbunden ist, das gespeichertes Ammoniak (19) aus dem Speicher (B) entnommen und in der zweiten Stromquelle (Q2) zur Erzeugung des zweiten elektrischen Stroms (5) als Brennstoff eingesetzt werden kann.

6. Vorrichtung nach Anspruch 5, **dadurch gekennzeichnet, dass** die zweite Stromquelle (Q2) eine Brennstoffzelle umfasst, in der das als Brennstoff aus dem Speicher (B) zugeführten Ammoniak (19) elektrochemisch oxidiert werden kann.

7. Vorrichtung nach einem der Ansprüche 5 oder 6, **dadurch gekennzeichnet, dass** die zweite Stromquelle (Q2) ein thermisches Kraftwerk umfassen, in dem das aus dem Speicher entnommene, für die Stromerzeugung bestimmte Ammoniak (19) verbrannt werden kann, um mechanische Energie für den Antrieb eines Stromgenerators zu erzeugen.
